# EUROPEAN PATENT SPECIFICATION

(11) **EP 4 505 351 B1**
(45) Date of publication and mention of the grant of the patent: **29.04.2026**
(21) Application number: 23717844.7
(22) Date of filing: 30.03.2023
(51) Int. Cl.: G06K 15/10, H04N 1/405, H04N 1/60, B41J 2/21

(54) **RENDERING A COLOR SEPARATION**
WIEDERGABE EINER FARBTRENNUNG
RENDU D'UNE SÉPARATION DES COULEURS

(30) Priority: 01.04.2022 EP 22166282
(43) Date of publication of application: 12.02.2025
(73) Proprietor: ECO3 BV, 2640 Mortsel (BE); AGFA NV, 2640 Mortsel (BE)
(72) Inventor: MAHY, Marc, 2640 Mortsel (BE); VANHOOYDONCK, Rudi, 2640 Mortsel (BE)
(74) Representative: Van Garsse, Joris Marc H
(86) International application number: PCT/EP2023/058368
(87) International publication number: WO 2023/187096

(56) References cited:
- US-A1- 2003 025 749
- US-A1- 2014 211 221
- US-A1- 2020 236 249
- US-B1- 6 357 847

## Description

### Technical Field

The present invention relates to the rendering of a color separation with ink or toner on a substrate by a digital printer, especially a multi-pass printing system.

### Background Art

A multi-pass printing system typically consists of a shuttle that contains one or more marking units, such as inkjet printheads, per colorant value. In multi-pass printing the movement of the shuttle is called the fast scan direction, the slow scan direction is related to the change of the substrate relative to the shuttle (change of the substrate to the head or vice versa). The shuttle can print either while moving in one direction, e.g. only while moving from left to right, (i.e. uni-directional printing mode), or print while moving both from left to right and from right to left (i.e. bi-directional printing mode).

One of the main defects of such multi-pass printing systems is the occurrence of banding. There are different types of banding that can be present such as banding due to missing nozzles, differences in ink jetting directions of nozzles, gloss banding and registration errors between the substrate and the shuttle in case of multiple passes to name a few. For example, the changing position of substrate and/or marking unit by discrete steps in such a printer makes that said steps have to be implemented very accurately to avoid spacing between two adjacent swaths but also the dimensions of the substrate may change when it receives ink or toner. There is a real need to reduce visual repeating banding and a lot of equipment manufacturers have put forward a number of printing methods to overcome all kind of banding by using so called printmasks. E.g. patent US6764162B2 discloses to use a shingle mask derived from a shingle mask density distribution which exhibits a trapezoidal shape. By using such printmasks at the current printing speed at high resolution it is found that banding is still visible especially when they have a kind of annoying repetition.

The following prior art documents are also acknowledged.

US2003/025749 A1 (KROUSS PAUL R [ES]) discloses a bi-directional printing method that reduces artifacts by generating separate halftone data sets for forward and reverse printing directions.

US6357847 B1 (ELLSON RICHARD N [US]) advances the technology by introducing a puzzle cut technique for managing print swath transitions, effectively masking alignment imperfections between consecutive swaths.

US2020/236249 A1 (BOUWENS LUC [BE]) addresses specialized applications in wood pattern reproduction, focusing on maintaining consistent chroma and gloss across multiple printing passes.

US2014/211221 A1 (PUIGARDEU ARAMENDIA SERGIO [ES]) represents more recent developments in page-wide-array printing technology, introducing advanced halftoning methods that enable simultaneous printing across the entire page width while maintaining compatibility with existing hardware architectures.

### Summary of invention

It is an objective of the present invention to provide a solution for the above stated problems. The object has been achieved by the features of the independent claim, which include diluting a color separation (8) in minimum two digital images which are each divided in consecutive strips having an overlap and wherein the non-overlap zones and overlap zones are halftoned to obtain non-aligned halftone rasters, also called independent halftone rasters, which are then transferred to a digital printer for printing said color separation (8).

Other features, elements, steps, characteristics and advantages of the present invention will become more apparent from the figures and following detailed description of preferred embodiments of the present invention.

Specific embodiments of the invention are also defined in the dependent claims.

### Brief description of drawings

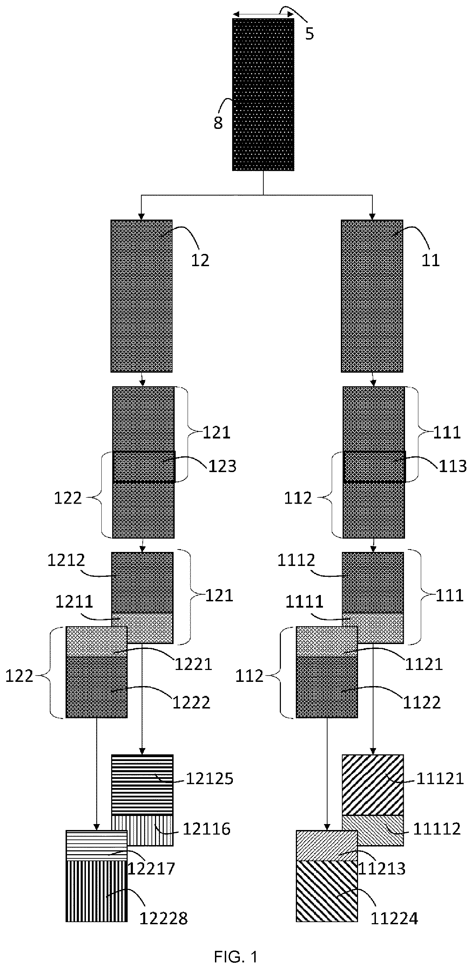

Figure 1 illustrates a flowchart of a preferred embodiment whereby a color separation (8) with certain width (5) is split in a plurality of sub-images. The halftone raster (11121) corresponds with the first inter-zone (1112). The halftone raster (11112) corresponds with the first overlap-zone (1111). The halftone raster (11213) corresponds with the second overlap-zone (1121). The halftone raster (11224) corresponds with the second inter-zone (1122).
   The halftone raster (12125) corresponds with the third inter-zone (1212). The halftone raster (12116) corresponds with the third overlap-zone (1211). The halftone raster (12217) corresponds with the fourth overlap-zone (1221). The halftone raster (12228) corresponds with the fourth inter-zone (1222).

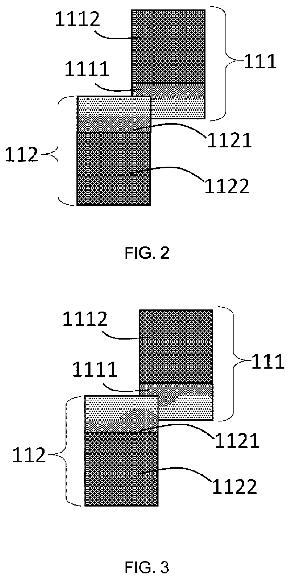

Figure 2 and Figure 3 illustrates in detail each a method how the first overlap-zone (1111) and second overlap-zone (1121) is diluted from the first overlap (113, not shown).

### Description of embodiments

The present embodiment is a method of rendering a color separation (8) of a digital image on a digital printer, preferably an inkjet printer. From said color separation (8) a first diluted digital image (11) and second diluted digital image (12) is obtained. Thus, minimal two diluted digital images are obtained. The dimensions of said minimal two diluted digital images are hereby the same as the digital image. The digital image is hereby a two-dimensional image wherein for each pixel, having a certain value, a coordinate for the location can be appointed.

Obtaining diluted digital images is a splitting method of a digital image in digital sub-images wherein for example a value of a color separation (8) on a certain coordinate is distributed
in 40% of said value, which is then stored on said coordinate in the first diluted digital image (11); and
in 60% of said value, which is then stored on said coordinate in the second diluted digital image (12).

The distribution is hereby preferably from 1% to 99%; more preferably from 30% to 70%; most preferably from 45% to 55% or 100% divided by the number of digital sub-images that are needed.

Said both diluted digital images are each divided in plurality of consecutive strips wherein minimum two strips that follow each other are overlapping each other partially so
- the first diluted digital image (11) is divided in a plurality of consecutive strips which comprises a first strip (111) having a first inter-zone (1112); followed by a first overlap-zone (1111); and a second strip (112) having a second overlap-zone (1121); followed by a second inter-zone (1122) wherein the first overlap-zone (1111) and second overlap-zone forming an overlap in said first strip (111) and second strip (112); and wherein the first overlap-zone (1111) and the second overlap-zone (1121) are diluted of said overlap (113) in said first strip (111) and said second strip (112);
- the second diluted digital image (12) is divided in another plurality of consecutive strips which comprises a third strip (121) having a third inter-zone (1212); followed by a third overlap-zone (1211); and a fourth strip (122) having a fourth overlap-zone (1221); followed by a fourth inter-zone (1222) wherein the third overlap-zone (1211) and fourth overlap-zone (1221) forming an overlap (123) in said third strip (121) and fourth strip (122); and wherein the third overlap-zone (1211) and the fourth overlap-zone (1221) are diluted of said overlap (123) in said third strip (121) and said fourth strip (122).

Thus, the first overlap-zone (1111) is obtained by lighten the overlap (113) in the first strip (111) and the second strip (112). The second overlap-zone (1121) is obtained by lighten the overlap (113) in the first strip (111) and the second strip (112). The third overlap-zone (1211) is obtained by lighten the overlap (123) in the third strip (121) and the fourth strip (122). The fourth overlap-zone (1221) is obtained by lighten the overlap (123) in the third strip (121) and the fourth strip (1122)

The first diluted digital image (11) and second diluted digital image (12) are then rendered by
- obtaining non-aligned halftone rasters (11121, 11112, 11213, 11224, 12125, 12116, 12217, 12228) of the first inter-zone (1112); the second inter-zone (1122); the first overlap-zone (1111); the second overlap-zone (1121); the third inter-zone (1212); the fourth inter-zone (1222); the third overlap-zone (1211) and the fourth overlap-zone (1221);
   transferring said non-aligned halftone rasters to a print controller of the digital printer for printing the color separation (8) on the digital printer wherein the halftone raster of the third inter-zone (1212) is partially or fully printed on top of the non-aligned halftone raster of the first inter-zone (1112);
   the non-aligned halftone raster of the fourth inter-zone (1222) is partially or fully printed on top of the non-aligned halftone raster of the second inter-zone (1122);
   the non-aligned halftone raster of the second overlap-zone (1121) is partially or fully printed on top of the halftone raster of the first overlap-zone (1111);
   the non-aligned halftone raster from the fourth overlap-zone (1221) is partially or fully printed on top of the halftone raster of the third overlap-zone (1211).

This way of rendering wherein overlaps are generated makes it possible to have better print quality such as no gloss banding, no density banding, no streaks...It is found that image quality issues caused by step-errors in movement a media while printing on said media are less visible and even invisible. The previous steps are illustrated by arrows in FIG.1 wherein a color separation (8) having a width (5) at the top of FIG. 1 is split and converted to non-aligned halftone rasters at the bottom of FIG. 1.

The overlap (113) at the first diluted digital image (11) and the overlap (123) at the second dilutated digital image (12) is illustrated in Figure 1 at the same position but the position of said second overlap may also be generated at another position which is more preferred to de-visualize position errors or misalignments in movements of substrate and/or printing units and/or misalignments of printing units in the digital printer.

### Rendering a digital image on a digital printer

Rendering a digital image, which is here a continuous-tone-image, on a digital printer includes a) halftoning the digital image, b) transferring the halftoned digital image to said digital printer and c) printing said halftoned digital image on a substrate, also called a print-receiver, which is fed in said digital printer. The digital printer may print on said substrate with one or more colorants.

Rendering a digital image on a digital printer may also include digital image manipulating the digital image such as color managing, color correcting, enlarging, cropping... Such manipulations are well-known in the graphic arts and most of said steps can for example be found in Photoshop^{™} of manufacturer Adobe^{™}.

The digital image hereby is a computer file which is storable in memory, and normally formatted in a raster graphic format such as TIFF6.0 or JPEG wherein the digital image comprises a plurality of pixels which certain values. For clarity, a digital image for rendering on a digital printer is here a two-dimensional digital image having a dimension with a certain width and certain height wherein said width and height are defined by a number of pixels. The height of a digital image is in the present embodiments measured parallel to the print direction.

If the digital image is a color digital image, more than one color separation can be distilled wherein pixels of each color separation defines the values of one color. For example, a CMYK-digital image can be distilled to 4 color separations: One for cyan colors (C), one for magenta colors (M), one for yellow colors (Y) and one for black colors (K). The color separation of each color is then halftoned, transferred and printed on a print-receiver with an ink / toner corresponding the color of the color separation by said digital printer. Said ink / toner determines a colorant of said digital printer. The halftoned color separations are printed on top of each other to simulate the color digital image.

A value on a certain coordinate in a color separation of a color from a color digital image defines the intensity of said color in said digital image at said certain coordinate. Said intensity may be expressed in percentages or as a value within an interval for example [0,255]; [0, 65535] as defined by the bit depth of the color separation.

When the four transferred-and-halftoned color separations are printed on said print-receiver said color digital image is rendered and forms a reproduction of said color digital image. Such color digital image is also called color continuous-tone image which needs to be halftoned before it can be printed. A color separation of a digital color image is hereby also a digital image that contains pixels at coordinates wherein said pixels has values of one color; and wherein said color separation can be stored in a computer file and normally formatted in a raster graphic format such as TIFF6.0 or JPEG, in the same manner as gray continuous-tone images which are also called grayscale images.

The digital printer is preferably an inkjet printer and more preferably a multi-swath inkjet printer wherein the color separation (8) is printed by multiple swaths according the consecutive strips having an overlap.

In a preferred embodiment the digital printer has a printing unit and an other printing unit; and wherein the plurality of consecutive strips is printed by said printing unit and the other plurality of consecutive strips are printed by said other printing unit. Said printing unit and/or said other printing unit preferably comprises an inkjet printhead containing ink having a colorant corresponding to the color of the color separation (8).

### Splitting a continuous-tone-image in two or more digital sub-images

A continuous-tone-image can be split in two or more digital sub-images wherein said sub-digital images when rendered (= halftoned, transferred, printed) on a digital printer and wherein the sub-images are printed on top or partially on top of each other for forming a reproduction said continuous-tone-image. For clarity a continuous-tone-image is not a halftoned image. After the splitting the digital sub-images are halftoned to make it possible to transfer and to print them on a digital printer.

A) A first method of splitting is done by using print masks which defines for each pixel in the continuous-tone-image to which digital sub-image it will belong after the splitting. This is a well-known step used in rendering digital images on inkjet printers, for example wherein a halftoned digital sub-image, generated by such split with a print mask, is transferred and then printed by jetting ink from a printhead in a first pass while moving said print-head above a print-receiver and another halftoned digital sub-image, generated by said same split, is printed by jetting ink from said printhead in a second pass while moving said printhead above said print-receiver, as for example is disclosed in EP0718105 A1 (HP Inc). A print mask makes it possible to decide in which pass of a printhead a pixel of a continuous-tone-image has to be printed. For the past several decades, inkjet technology has been shown that specific design of print masks is helpful to prevent ink coalescences, gloss differences... For clarification a print mask is not the same as halftoning.

A print mask is mostly of the time a determined two-dimensional array operatively coupled to the print controller of the inkjet printer. Said print mask governs the ejection of drops of the ink during multiple printing passes of the carriage over the print medium. For a two-pass print mode said print mask is then preferably a binary two-dimensional array with two values: 0 for the first pass and 1 for the second pass.

B) **Another way of splitting a continuous-tone-image** in two or more digital sub-images is wherein the value of each pixel in said continuous-tone-image is divided in smaller values and each of said values are stored in a separate sub-images, as for example is disclosed in US7168784B2 (Hewlett Packard Development Co LP). Said sub-images are then diluted versions of said continuous-tone-image, further also called diluted digital images. For example, when splitting a continuous-tone-image in a first and second diluted image, a value of each pixel is divided in a first and second value which are 50% of said value.

If the continuous-tone-image is a color separation or a part of a color separation one or more digital diluted images are in the present invention achieved by increasing the luminance of pixels of said color separation, also called lighten the color separation or dodging the color separation.

Said first value is stored in a first diluted digital image (11) and the second value is stored in a second diluted digital image (12). Said first diluted image and second diluted image are toned downed versions of said continuous-tone-image. Other percentages, so called set of dilution percentages for dividing the value of a pixel over the diluted digital images of a pixel are also usable. The number of percentages in said set is the number of diluted digital images. The total sum of the percentages in said set is normally 100% to render the color separation (8) correctly.

For both methods of splitting, the spitting is preferably dependable on the position of a pixel in the continuous-tone-image. Each pixel has a certain position that is mainly defined as a x-coordinate and y-coordinate (Cartesian coordinate) and very rarely defined as a polar coordinate. For example, if a continuous-tone-image is split by a print mask into a first and second digital sub-images, higher the value of the y-coordinate, the higher the chance it shall be stored in the second digital sub-image. Another example US6357847 (XEROX CORP) discloses a zipper / puzzle cut as printmask in overlap zones at col. 4, II. 29-33 and FIG. 5. WO1996023662 (CAREY W. KRIGER) discloses also several manners in overlap zones how to split said overlap zones. Another example, if a continuous-tone-image is split by dilution into a first and second diluted digital images higher the value of the y-coordinate, the higher the chance a bigger part of the value of the pixel shall be stored in the second digital sub-image. Said two digital sub-images shall become then complementary gradient images wherein the continuous-tone-image is hereby diluted from 0% to 100% in one or more directions. The dependency on the position how to split (print mask / dilution) may also be determined by a mathematical function (e.g. functions with sinus-operators) or even a random function, whether or not combined with a mathematical function, which determines when splitting by a print mask to which digital sub-image the value of a pixel shall belong according position of said pixel in the digital image or when splitting into diluted digital images which part shall be stored in the first digital sub-image and a remaining part shall be stored in the second digital sub-image.

According said principle of splitting, in a preferred embodiment (FIG. 3) the first overlap-zone (1111) is diluted from the overlap in the first strip (111) and the second strip (112) according to a determined mathematical function and/or a determined random function and wherein the second overlap-zone (1121) is diluted from the overlap in the first strip (111) and the second strip (112) as a complement of the first overlap-zone (1121).

In a preferred embodiment the dependency of the dilution to form the first overlap-zone (1111) and the second overlap-zone (1121) from the overlap (113) in said first strip (111) and said second strip (112) may comprise a first virtual edge which extends in the width or height of said overlap. On said virtual edge the set of dilution percentages is fixed which means that the value of pixels that lay around or on said virtual edge shall be divided according said set of dilution percentages (see Fig. 2 and Fig. 3). The overlap may have a first set of virtual edges which extends in the width or height of said overlap but with each another set of dilution percentages. Virtual edges of said first set of virtual edges are preferably substantially parallel with each other.

In a more preferred embodiment also the dependency of the dilution to form the third overlap-zone (1211) and the fourth overlap-zone (1221) from the overlap (123) in said third strip (121) and fourth strip (122) may comprise a second virtual edge which extends in the width or height of said overlap. On said second virtual edge the set of dilution percentages is fixed which means that the value of pixels that lay around or on said virtual edge shall be divided according said set of dilution percentages. The overlap in said third strip (121) and fourth strip (122) may have a second set of virtual edges which extends in the width or height of said overlap but with each another set of dilution percentages. Virtual edges of said second set of virtual edges are preferably substantially parallel with each other.

Such virtual edges may be determined by a mathematical function or a random function, whether or not combined with a mathematical function. The edge may be a straight line (as defined by a function y= b; see Fig. 2) but preferably it is a wavy line; a jagged line, a zip line, zigzag line (see Fig. 3). More general the edge is preferably a line having a plurality of indents wherein the height of said indents more preferably vary, most preferably vary random. It is found that a straight line as edge sometimes give an annoying stripe in a printed copy of the color separation (8) for example due to inaccurate transport of the substrate (e.g. issues caused by step-errors in movement a media). A regular zigzag line (= triangle wave or saw tooth wave) as edge camouflages said inaccurate transport but preferably the corners (= indents) in a zigzag line have variable angles and the height varies. The wavy line may be defined by a mathematical function have a sinus- or cosinus-function.

No print mask is used for overlaps in the present embodiments but the first overlap-zone (1111) and second overlap-zone (1121) are halftoned independently and the third overlap-zone (1211) and fourth overlap-zone (1221) are halftoned independently to have better print quality such as avoiding gloss banding, avoiding density banding, avoiding streaks...It is found that image quality issues caused by step-errors in movement a media while printing on said media are less and even invisible with the present embodiment.

### The plurality of consecutive strips

The first strip (111) and second strip (112) and third strip (121) and fourth strip (122) in the present embodiment are elongated rectangular digital images having both the same width (5) as the diluted digital image where it is divided from. The overlap height and height of said strips is preferably selectable by the operator of the digital printer or can be transferred together with the non-aligned halftone rasters to a print controller of the digital printer so the correct overlap is used when the color separation (8) is printed. The height of each strip in a plurality of strips is preferably the same but may have a difference in height of 1 to 10 pixels. Smaller said height, the more strips of the plurality of consecutive strips shall be obtained from a diluted digital image. The height of said strips is more than one pixel because of the use of an overlap, preferably smaller than 100000 pixels. The height is hereby measured in the print direction.

The non-zero height of the overlap in said first strip (111) and said second strip (112), which is then also the height of the first overlap-zone (1111) and the second overlap-zone (1121), is preferably more than one pixels and more preferably smaller than 100000 pixels. The height of the first inter-zone (1112) and second inter-zone (1122) is preferably equal and more preferably larger than the height of the first overlap-zone (1111). The height is hereby measured in the print direction.

The non-zero height of the overlap in said third strip (121) and said fourth strip (122), which is then also the height of the third overlap-zone (1211) and the fourth overlap-zone (1221), is preferably more than one pixels and more preferably smaller than 100000 pixels. The height of the third inter-zone (1212) and fourth inter-zone (1222) is preferably equal and more preferably larger than the maximum height of the third overlap-zone (1211). The height of the third strip (121) is preferably equal to the height of the first strip (111) and the height of the fourth strip (122) is preferably equal to the height of the second strip (112). The height of the overlap in the third strip (121) and the fourth strip (122) is preferably equal to the height of the overlap in the first strip (111) and the second strip (112). The height is hereby measured in the print direction.

If the number of strips is N for the first diluted image (11) / second diluted digital image (12) than N-1 overlaps are generated for each diluted digital image (11, 12). The height of said N-1 overlaps is preferably the same but it is found that is better to vary the height of said overlaps between -20 pixels and + 20 pixels, preferably between -10 pixels and + 10 pixels.

The diluted images, consecutive strips, overlaps, overlap-zones, inter-zones of the present embodiments have preferably the same width as the color separation (8).

### Obtaining non-aligned halftone rasters

When a CMYK-digital image is halftoned each color separation is mostly halftoned separately. There is no correspondence, no dependency between the halftones of the color separations. The halftoned color separations are thus non-aligned halftone rasters between each other. For example, when using blue-noise thresholds for the halftoning-step for each color separation, a different random seed is used to generate such blue-noise threshold for each color (C, M, Y, K). Due to said different random seed non-aligned halftone rasters are obtained, which can be called independent halftoning between parts of a digital image which can be color separations and/or diluted sub-images and/or divided (sub-) digital images whether or not with overlap-zones. Non-aligned halftone rasters can also be called independent halftone rasters.

The non-aligned halftone rasters are between each other independently obtained with one or more halftoning methods such as one or more error diffusion methods. There is no dependency between said halftone rasters.

In the technical field of halfoning, dependent halftoning also exists. The generation of the halftoned color separations depends herein on the values of each color together. "Dependent color halftoning: Better quality with less ink" from Sasan Gooran in Journal of Imaging Science and Technology, 2004, volume 48, pages {354-362} discloses such method. For clarity this method is not used in the present embodiments.

Preferably an error-diffusion method is used but threshold halftoning may also be used for the halftoning steps. An error diffusion method is described by Ulichney, and others, such as Floyd and Steinberg uses convolution-style calculations and is implemented for use with copiers, facsimile machines and inkjet printers. EP1592226A1 (AGFA-GEVAERT) discloses for example a multilevel error-diffusion method.

In the present embodiments non-aligned halftone rasters of the following parts are obtained: the first inter-zone (1112); the second inter-zone (1122); the first overlap-zone (1111); the second overlap-zone (1121); the third inter-zone (1212); the fourth inter-zone (1222); the third overlap-zone (1211) and the fourth overlap-zone (1221). Each part has thus to be halftoned by one or more halftoning means so there is no correspondence, no dependency between the halftones of the parts.

To achieve said non-aligned halftone rasters, the same halftoning-method, such as error-diffusion, may be used but initial halftoning-parameters are then different for each parts. This results in non-aligned halftone rasters.

Another more effective way to achieve said non-aligned halftone rasters is arranging more than one of the parts in a single column, also called stitching, for forming a new digital image, preferably without space between the parts, and said new digital image is then halftoned, preferably with error-diffusing method, with a certain initial halftoning-parameter before the halftoned digital image is again divided in halftoned parts corresponding to the arranged parts. Hereby the divided halftoned parts become non-aligned halftone rasters.

The order in the single column is preferably the first inter-zone (1112); the second inter-zone; the first overlap-zone (1111); the second overlap-zone (1121); the third inter-zone (1212); the fourth inter-zone (1222); the third overlap-zone (1211) and the fourth overlap-zone (1221) or vice-versa.

Two new images may also be generated: a first new image with an arrangement with the first inter-zone (1112); the second inter-zone (1122); the first overlap-zone (1111); the second overlap-zone (1121) and a second new image with an arrangement with the third inter-zone (1212); the fourth inter-zone (1222); the second overlap-zone (1121); the fourth overlap-zone (1221). Both new images are halftoned to obtain two non-aligned halftone rasters: one that represents one of the new images and a second that represents the other of the new images. Said non-aligned halftone rasters are then divided in parts corresponding the arranged parts.

The use of an error-diffused-method for halftoning the parts is most preferred in the present embodiments to avoid artefacts between overlapped parts and/or between parts.

When said non-aligned halftone raster of the first/third overlap-zone (1111, 1211) and second/fourth overlap-zone (1121, 1221) is printed, after a transfer to a print controller of the digital printer for printing, it may happen that due to inaccuracies of substrate transport and/or alignment of printing unit and/or transport of printing unit and/or due to substrate deformations there is a color inconsistency and/or gloss inconsistency with the first/third inter-zone (1112, 1212) and/or second/fourth inter-zone (1122, 1222), there for the first/third overlap-zone (1111n 1211) and/or second/fourth overlap-zone (1121, 1221) have to be calibrated first to avoid said color inconsistency.

On the first/third overlap-zone (1111, 1211) and/or second/fourth overlap-zone (1121, 1221) a calibration curve may be applied wherein said calibration curve is generated by printing and measuring several patches of overlapping non-aligned halftone rasters of color separations having pixels with all the same values.

In a preferred embodiment is the first overlap-zone (1111) and/or the second overlap-zone (1121) calibrated, preferably with a calibration curve or calibration look-up-table, for avoiding color and/or gloss inconsistency between the printed first inter-zone (1112), the printed second inter-zone (1122) and the printed overlap in the first strip (111) and the second strip (112). Due to inaccuracies of substrate transport and/or alignment of printing unit and/or transport of printing unit and/or due to substrate deformations, dots may be printed on top of each other or next to each other which may cause a color and/ or gloss inconsistency which may be corrected by calibration the overlap-zones.

In a preferred embodiment is the third overlap-zone (1211) and/or the fourth overlap-zone (1221) calibrated, preferably with a calibration curve or calibration look-up-table, for avoiding color and/or inconsistency between the printed third inter-zone (1212), the printed fourth inter-zone (1222) and the printed overlap in the third strip (121) and the fourth strip (122).

Due to inaccuracies of substrate transport and/or alignment of printing unit and/or transport of printing unit and/or due to substrate deformations, dots may be printed on top of each other or next to each other which may cause a color inconsistency which may be corrected by calibration the overlap-zones.

For the calibration of the overlap-zones several patches can be measured by densitometers, colorimeters, glossmeters and/or spectrophotometers. The glossmeter is mainly used for calibrating the gloss inconsistency. It is found that such gloss calibration is needed when UV curable inks are used especially on non-absorbing substrates. In a more general approach, BSDF measurements can be used to measure and correct the gloss component, i.e. BRDF for reflectance and BTDF for transmittance. Based on the gloss/BSDF data and the conventional color data for an ink / toner combination in an overlap is looked for that has the identical same gloss effect as the same color in the non-gradient image part.

### Flow

Nowadays a PDF (portable document format)-file or PS (post-script)-file is converted with a RIP (raster image processor) to a digital color image which contains the colors of the selected printer, e.g. CMYK. Within said conversion the colors of the PDF-file or PS-file are color managed towards the colors and color gamut of the selected printer with a color management system and each color separation is normally linearized to have smooth gradients. The linearization and color management depends mainly on the substrate whereon shall be printed; the inks; halftoning technique and the printing technology. The color separations are mostly independently halftoned to achieve non-aligned halftone raster which are transferred to a digital printer. If the digital printer is using swath-method to build-up the color separation such as in a multi-swath inkjet printer, the digital printer divides the halftone raster in several bands to be printed in one of multiple swaths.

In the present embodiment the color separations are firstly adapted before the transfer to a digital printer. Said adaptation depends on the height of the overlap in the first strip (111) and the second strip (112) and the height in the third strip (121) and the fourth strip (122); It depends also on the heights of the plurality of consecutive strips and the other plurality of consecutive strips. The height of both plurality of consecutive strips is linked with used swath heights and overlap heights during printing. So said adaptation have to know in front how the color separation (8) shall be printed on the digital printer. So if another overlap is used and/or other swath heights is used the adaptation have to be redone. The adaptation may be done by a prepress workflow system but preferably "on the fly" whereby the adaptation is performed by an adaption module which is connected with the digital printer wherein said module receives a color separation as input together with swath heights, swat overlaps and generates the non-aligned halftone rasters (11121, 11112, 11213, 11224, 12125, 12116, 12217, 12228) of the first inter-zone (1112); the second inter-zone (1122); the first overlap-zone (1111); the second overlap-zone (1121); the third inter-zone (1212); the fourth inter-zone (1222); the third overlap-zone (1211) and the fourth overlap-zone (1221).

During the adaptation also a nozzle-calibration may be performed which calibrates the droplet-amount differences between nozzles of an inkjet printhead of the used one or more printing units. Such nozzle-calibration is sometimes called density compensation. A way of calibrating the density differences of the droplets jetted by nozzles in an inkjet printhead was already implemented in 2005 on the single pass inkjet printer DOTRIX^{™} from AGFA.

### Pigmented Aqueous Inkjet Ink Sets

The color separation is preferably printed with a pigment aqueous inkjet ink, which is preferably part of a pigment aqueous inkjet ink set.

A pigmented aqueous inkjet ink set according to a preferred embodiment of the invention comprises:
a cyan aqueous inkjet ink containing a copper phthalocyanine pigment, preferably a β-copper phthalocyanine pigment;
a red aqueous inkjet ink containing a red pigment selected from the group consisting of C.I. Pigment Red 254, C.I. Pigment Red 122, C.I. Pigment Red 176 and mixed crystals thereof or a magenta aqueous inkjet ink containing a magenta pigment selected from the group consisting of
C.I. Pigment Red 55, C.I. Pigment Red 60, C.I. Pigment Red 82, C.I. Pigment Red 86, C.I. Pigment Red 86: 1, C.I. Pigment Red 167:1, C.I. Pigment Red 279 and mixtures thereof;
a yellow aqueous inkjet ink containing a pigment C.I Pigment Yellow 150 or a mixed crystal thereof; and a black aqueous inkjet ink containing a carbon black pigment; In addition to specific colour pigments, the inkjet inks contain also a surfactant, preferably a fluorosurfactant. The surfactant allows for spreading on the substrate, which enhances indirectly also the metamerism. In a preferred embodiment of the pigmented aqueous inkjet ink set, the pigmented aqueous inkjet inks have a static surface tension at 25° C. between 19.0 mN-m and 27.0 mN-m for good spreading on the substrate.

The hue angle H* of a red inkjet ink is normally in the range of 15° to 65°. For providing good reproduction of colour images, the hue angle H* of a red inkjet ink in the present invention is preferably between 15° and 50°, more preferably between 20° and 40°. In a preferred embodiment of the pigmented aqueous inkjet ink set, the red pigment is C.I. Pigment Red 254 or a mixed crystal thereof. The hue angle H* is calculated in CIELab color space by the formula: tan-1(b*/a*) (degree) wherein a* and b* are the chromaticity coordinates in the CIE Lab color space.

The hue angle of a yellow inkjet ink is usually in the range of 75° to 110°. For providing good reproduction of colour images, the hue angle H* of a yellow inkjet ink in the present invention is preferably between 80° and 105°, more preferably between 85° and 95°. In a preferred embodiment of the pigmented aqueous inkjet ink set, the hue angle H* of the yellow aqueous inkjet ink is higher than 85°, more preferably between 86° and 98°, and most preferably between 87° and 95°.

The pigmented aqueous inkjet inks in the ink set should preferably also have a chroma C* of at least more than 50.

A pigmented aqueous ink may comprise a biocide and/or at least one pH adjuster, such as NaOH, KOH, NEt3, NH3, HCl. Preferred pH adjusters are triethanol amine, NaOH and H2SO4.

### Preparation of Pigmented Aqueous Inks

The one or more aqueous inkjet inks may be prepared by precipitating or milling the colour pigment in the dispersion medium in the presence of the polymeric dispersant, or simply by mixing a self-dispersible colour pigment in the ink. Mixing apparatuses may include a pressure kneader, an open kneader, a planetary mixer, a dissolver, and a Dalton Universal Mixer.

Suitable milling and dispersion apparatuses are a ball mill, a pearl mill, a colloid mill.

If the inkjet ink contains more than one pigment, the colour ink may be prepared using separate dispersions for each pigment, or alternatively several pigments may be mixed and co-milled in preparing the dispersion.

The dispersion process can be carried out in a continuous, batch or semi-batch mode. The milling time can vary widely and depends upon the pigment, selected mechanical means and residence conditions, the initial and desired final particle size, etc. In the present invention, pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like.

### Polymer Latex Binders

One or more of the aqueous inkjet inks may contain a polymer latex binder, preferably a polyurethane based latex. It was observed that polyurethane based latex is less detrimental for adhesion in flooring laminates than acrylic latex binders.

The polymer latex binder is not particularly limited as long as it has stable dispersibility in the ink composition. There is no limitation on the main chain skeleton of the water-insoluble polymer.

In the preferred embodiment, the polymer latex is a polyurethane latex, more preferably a self-dispersible polyurethane latex. The polymer latex binder in the one or more aqueous inkjet inks is preferably a polyurethane based latex binder for reasons of compatibility with the thermosetting resin; when used in the manufacturing of decorative surfaces.

The latex binder polymer particles preferably have a glass transition temperature (Tg) of 30° C. or more. The minimum film-forming temperature (MFT) of the polymer latex is preferably -25 to 150° C., and more preferably 35 to 130° C.

### Jetting Viscosity and Jetting Temperature

The jetting viscosity is measured by measuring the viscosity of the liquid at the jetting temperature. The jetting viscosity may be measured with various types of viscometers such as a Brookfield DV-II+ viscometer at jetting temperature and at 12 rotations per minute (RPM) using a CPE 40 spindle which corresponds to a shear rate of 90 s⁻¹ or with the HAAKE Rotovisco 1 Rheometer with sensor C60/l Ti at a shear rate of 1000 s⁻¹.

In a preferred embodiment, the jetting viscosity is from 10 mPa·s to 200 mPa·s more preferably from 25 mPa·s to 100 mPa·s and most preferably from 30 mPa·s to 70 mPa·s.

The jetting temperature may be measured with various types of thermometers. The jetting temperature of jetted liquid is measured at the exit of a nozzle in the printhead while jetting or it may be measured by measuring the temperature of the liquid in the liquid channels or nozzle while jetting through the nozzle. In a preferred embodiment, the jetting temperature is from 10° C. to 100° C. more preferably from 20° C. to 60°C. and most preferably from 30° C. to 50° C.

### Substrate

The color separation of the present embodiment and preferred embodiments is printed by the digital printer on a substrate which may be plastic, foil, metal, textile... but paper is most preferred.

The substrate may comprise an inkjet-receiving layer, which preferably contains an inorganic pigment P and a polymeric binder B; and more preferably, wherein the pigment P is selected from the group consisting of alumina hydrates, aluminium oxides, aluminium hydroxides, aluminium silicates, and silicas. The color separation is then printed on the inkjet-receiving layer.

This inkjet-receiving layer is to prevent that the color strength of the color separation is not reduced due to the absorbing of the inks / toners in the substrate. Preferably one or more ink receiving layers are applied on the substrate wherein a total dry weight of the set of ink receiving layers is between 2.0 g/m² and 10.0 g/m².

Handling of a substrate within a digital printer is well-known but the substrate is preferably supported by a print table, more preferable a vacuum table wherein the substrate is held down against the support by vacuum pressure. The substrate is preferably supported by a conveyor belt, more preferably a vacuum belt wherein the substrate is held down against the belt by vacuum pressure. By a set of air-channels in the vacuum table or vacuum belt a pressure differential is provided at the support by a connected vacuum chamber which is connected to one or more a vacuum pumps. The vacuum pressure guarantees the fixing and holding down of the substrate to have a good print quality and to minimize adjacent regions with gloss, luminance and/or chroma difference in the printed color separation because small inaccuracies of droplet landings on the substrate causes bad dot-on-dot precision which results in gloss, luminance and/or chroma artefacts, especially in adjacent elongated regions in the printed color separation.

If the substrate is a paper, then preferably said paper has a paper weight between 50 g/m² and 180 g/m² and more preferably a porosity according to Gurley's method (DIN 53120) between 8 and 20 seconds.

The printed color separation may be dried by a dry unit comprising an UV source (ultra violet source) or an IR source (Infra Red source) or by absorption in the substrate. The IR source is preferably a NIR source (=Near Infra Red source) such as a NIR lamp. The IR source may comprise carbon infrared emitters which has a very short response time. An other IR source is a SWIR (=Short Wave Infra Red source).

### Multi-swath inkjet printer

The present embodiment is mainly usable for multi-swath inkjet printers wherein the to be printed digital images is printed by multiple swaths, also called bands, to achieve a representation of the digital image. The most known method to do so is a moving printing unit in a first direction above a substrate while printing one of said multiple swaths. The substrate or printing unit may move then in a second direction which is perpendicular to the first direction to print a next swath by the same printing unit or even another printing unit.

Another less known method is using more than one stationary printing unit wherein one swath is printed while a substrate is moved underneath a first stationary printing unit for printing said swath and the next swath is printed by a second stationary printing unit while the substrate is moved underneath said second stationary printing unit.

Another method is moving a first printing unit and a second printing unit in a first direction above a substrate while printing a swath by said first printing unit and the next swath by said second printing unit.

Other combinations of moving one or more printing units / substrates are possible to print the digital image in a plurality of swaths.

The digital printer is preferably capable of marking substrate with a width between 1 meter and 5 meter and if the substrate is not a web but a sheet, the marking device is preferably capable of marking substrates with a height between 1 meter and 10 meter. More information about inkjet technology, incorporate printheads into an inkjet printhead unit and marking devices, which uses inkjet technology, are disclosed in STEPHEN F. POND. Inkjet Technology and Product Development Strategies. USA: Torrey Pines Research, 2000.

The print unit comprises preferably a plurality of inkjet printheads. An inkjet printhead is a means for jetting a liquid on a substrate through a nozzle.

The nozzle may be comprised in a nozzle plate, which is attached to the printhead. A plurality of nozzles in a printhead forms one or more nozzle rows.

A printhead may be any type of inkjet head such as a Valvejet printhead, piezoelectric inkjet printhead, thermal inkjet printhead, a continuous inkjet printhead type, electrostatic drop on demand inkjet printhead type or acoustic drop on demand inkjet printhead type or a page-wide inkjet printhead array, also called a page-wide inkjet array.

The printhead of the present invention is preferably suitable for jetting a liquid having a jetting viscosity of 5 mPa·s to 3000 mPa·s. A preferred printhead is suitable for jetting a liquid having a jetting viscosity of 20 mPa· s to 200 mPa·s; and more preferably suitable for jetting a liquid having a jetting viscosity of 50 mPa·s to 150 mPa·s.

It is found that not each nozzle from an inkjet printhead, such as a piezoelectric inkjet printhead jets the same volume of droplet when the nozzle is actuated by the same manner. Small density-differences occur between jetted droplets from nozzles from an inkjet printhead unit. If the actuation per nozzle or group of nozzles can be adapted than these small density-differences can be controlled, else the density-differences may be compensated in the wood simulation method of the present invention. The density differences cause also adjacent regions with differential gloss, luminance and/or chroma.

Probably these density-differences is caused by manufacturing reasons of the nozzles and inkjet printhead. The compensation may be performed before the halftoning of each sub-image, according to the present invention.

A preferred printhead for the present invention is a piezoelectric inkjet printhead. Piezoelectric inkjet printhead, also called piezoelectric inkjet printhead, is based on the movement of a piezoelectric ceramic transducer, comprised in the printhead, when a voltage is applied thereto. The application of a voltage changes the shape of the piezoelectric ceramic transducer to create a void in a liquid channel, which is then filled with liquid. When the voltage is again removed, the ceramic expands to its original shape, ejecting a droplet of liquid from the liquid channel.

The droplet forming means of a piezoelectric inkjet printhead controls a set of piezoelectric ceramic transducers to apply a voltage to change the shape of a piezoelectric ceramic transducer. The droplet forming means may be a squeeze mode actuator, a bend mode actuator, a push mode actuator or a shear mode actuator or another type of piezoelectric actuator.

The piezoelectric inkjet printhead is preferably a through-flow piezoelectric inkjet printhead. In a preferred embodiment the recirculation of the liquid in a through-flow piezoelectric inkjet printhead flows between a set of liquid channels and the inlet of the nozzle wherein the set of liquid channels corresponds to the nozzle.

In a preferred embodiment in a piezoelectric inkjet printhead the minimum drop size of one single jetted droplet is from 0.1 pL to 300 pL, in a more preferred embodiment the minimum drop size is from 1 pL to 30 pL, in a most preferred embodiment the minimum drop size is from 1.5 pL to 15 pL. By using grayscale inkjet head technology multiple single droplets may form larger drop sizes.

In a preferred embodiment the piezoelectric inkjet printhead has a drop velocity from 3 meters per second to 15 meters per second, in a more preferred embodiment the drop velocity is from 5 meters per second to 10 meters per second, in a most preferred embodiment the drop velocity is from 6 meters per second to 8 meters per second.

In a preferred embodiment the piezoelectric inkjet printhead has a native print resolution from 25 DPI to 2400 DPI, in a more preferred embodiment the piezoelectric inkjet printhead has a native print resolution from 50 DPI to 2400 DPI and in a most preferred embodiment the piezoelectric inkjet printhead has a native print resolution from 150 DPI to 3600 DPI. DPI is the abbreviation of dots per inch, which is a well-known measure of spatial printing, in particular the number of individual dots that can be place in a line within the span of 1 inch, which is 2.54 cm.

In a preferred embodiment with the piezoelectric inkjet printhead the jetting viscosity is from 5 mPa·s to 200 mPa·s more preferably from 25 mPa·s to 100 mPa·s and most preferably from 30 mPa·s to 70 mPa·s.

In a preferred embodiment with the piezoelectric inkjet printhead the jetting temperature is from 10° C. to 100° C. more preferably from 20° C. to 60°C. and most preferably from 30° C. to 50° C.

The nozzle spacing distance of the nozzle row in a piezoelectric inkjet printhead is preferably from 10 µm to 200 µm; more preferably from 10 µ m to 85 µm; and most preferably from 10 µm to 45 µm.

## Claims

1. Rendering a color separation (8) of a digital image on a digital printer comprising the steps:
- obtaining from said color separation (8) a first diluted digital image (11) and a second diluted digital image (12) by dividing each pixel value of the color separation (8) according to a set of dilution percentages for obtaining two or more diluted digital images;
- dividing said first diluted digital image (11) in a plurality of consecutive strips which comprises:
a first strip (111) having a first inter-zone (1112); followed by a first overlap-zone (1111); and
a second strip (112) having a second overlap-zone (1121); followed by a second inter-zone (1122) wherein the first overlap-zone (1111) and second overlap-zone (1121) forming an overlap in said first strip (111) and said second strip (112); and wherein the first overlap-zone (1111) and the second overlap-zone (1121) are diluted of said overlap in said first strip (111) and said second strip (112);
- dividing the second diluted digital image (12) in another plurality of consecutive strips which comprises:
a third strip (121) having a third inter-zone (1212); followed by a third overlap-zone (1211); and a fourth strip (122) having a fourth overlap-zone (1221); followed by a fourth inter-zone (1222) wherein the third overlap-zone (1211) and fourth overlap-zone (1221) forming an overlap in said third (121) and fourth strip (122); and wherein the third overlap-zone (1211) and the fourth overlap-zone (1221) are diluted of said overlap in said third strip (121) and said fourth strip (122);
- rendering the first diluted digital image (11) and the second diluted digital image (12) by
- obtaining halftone rasters (11121, 11112, 11213, 11224, 12125, 12116, 12217, 12228) of the first inter-zone (1112); the second inter-zone (1122); the first overlap-zone (1111); the second overlap-zone (1121); the third inter-zone (1212); the fourth inter-zone (1222); the third overlap-zone (1211) and the fourth overlap-zone (1221) wherein the halftone rasters are between each other independently obtained with one or more halftoning methods.
- transferring said halftone rasters to a print controller of the digital printer for printing the color separation (8) on the digital printer wherein
the halftone raster of the third inter-zone (1212) is partially or fully printed on top of the halftone raster of the first inter-zone (1112);
the halftone raster of the fourth inter-zone (1222) is partially or fully printed on top of the halftone raster of the second inter-zone (1122);
the halftone raster of the second overlap-zone (1121) is partially or fully printed on top of the halftone raster of the first overlap-zone (1111);
the halftone raster from the fourth overlap-zone (1221) is partially or fully printed on top of the halftone raster of the third overlap-zone (1211)
wherein the digital printer is a multi-swath inkjet printer wherein the color separation (8) is printed by multiple swaths corresponding the consecutive strips of the first diluted digital image (11) and the second diluted digital image (12).

2. Rendering a color separation (8) according to claim 1 wherein the first overlap-zone (1111) and/or the second overlap-zone (1121) is calibrated for avoiding color inconsistency between the printed first inter-zone (1112), the printed second inter-zone (1122) and the printed overlap in the first strip (111) and the second strip (112).

3. Rendering a color separation (8) according to claim 1 or claim 2 wherein the first overlap-zone (1111) and/or the second overlap-zone (1121) is calibrated for avoiding gloss inconsistency between the printed first inter-zone (1112), the printed second inter-zone (1122) and the printed overlap in the first strip (111) and the second strip (112).

4. Rendering a color separation (8) according to any of the claims from 1 to 3 wherein the third overlap-zone (1211) and/or the fourth overlap-zone (1221) is calibrated for avoiding color inconsistency between the printed third inter-zone (1212), the printed fourth inter-zone (1222) and the printed overlap in the third strip (121) and the fourth strip (122).

5. Rendering a color separation (8) according to any of the claims from 1 to 4 wherein the third overlap-zone (1211) and/or the fourth overlap-zone (1221) is calibrated for avoiding gloss inconsistency between the printed third inter-zone (1212), the printed fourth inter-zone (1222) and the printed overlap in the third strip (121) and the fourth strip (122).

6. Rendering a color separation (8) according to any of the previous claims wherein the digital printer has a printing unit and an other printing unit; and wherein the plurality of consecutive strips are printed by said printing unit and the other plurality of consecutive strips are printed by said other printing unit.

7. Rendering a color separation (8) according to any of the claims 1 to 6 wherein the first overlap-zone (1111) is diluted from the overlap in the first strip (111) and the second strip (112) according a gradient and wherein the second overlap-zone (1121) is diluted from the overlap in the first strip (111) and the second strip (112) according a complement of said gradient.

8. Rendering a color separation (8) according to any of the claims 1 to 6 wherein the first overlap-zone (1111) is splitted by a dilution method from the overlap in the first strip (111) and the second strip (112) according to a determined mathematical function and/or random function and wherein the second overlap-zone (1121) is splitted by a dilution method from the overlap in the first strip (111) and the second strip (112) as a complement of the first overlap-zone (1121).

9. Rendering a color separation (8) according to claim 7 or to claim 8 wherein the color separation (8) is printed with a pigmented aqueous ink on a substrate.

10. Rendering a color separation (8) according to claim 9 wherein the pigmented aqueous ink is selected from a group comprising: a cyan aqueous inkjet ink containing a copper phthalocyanine pigment, preferably a β-copper phthalocyanine pigment; a red aqueous inkjet ink containing a red pigment selected from the group consisting of C.I. Pigment Red 254, C.I. Pigment Red 122, C.I. Pigment Red 176 and mixed crystals thereof or a magenta aqueous inkjet ink containing a magenta pigment selected from the group consisting of C.I. Pigment Red 55, C.I. Pigment Red 60, C.I. Pigment Red 82, C.I. Pigment Red 86, C.I. Pigment Red 86: 1, C.I. Pigment Red 167:1, C.I. Pigment Red 279 and mixtures thereof; a yellow aqueous inkjet ink containing a pigment C.I Pigment Yellow 150 or a mixed crystal thereof; and a black aqueous inkjet ink containing a carbon black pigment.

11. Rendering a color separation (8) according to claim 10 wherein the substrate is paper having a paper weight between 50 g/m² and 180 g/m².

12. Rendering a color separation (8) according to claim 11 wherein the paper comprises an inkjet-receiving layer, which contains an inorganic pigment P and a polymeric binder B.

13. Rendering a color separation (8) according to claim 12 wherein the pigment P is selected from the group consisting of alumina hydrates, aluminium oxides, aluminium hydroxides, aluminium silicates, and silica's.

14. Rendering a color separation (8) according to any of the previous claims wherein the halftone rasters are obtained by one or more error-diffusion methods.

15. Rendering a color digital image wherein the digital printer is having a first colorant and second colorant and a first color separation is generated from said color digital image that correspondents with the first colorant and a second color separation is generated from said color digital image that correspondents with the second colorant; and wherein the first color separation is rendered according to any of the previous claims using the first colorant and the second color separation is rendered according to any of the previous claims using the second colorant.

## Patentansprüche

1. Wiedergabe einer Farbtrennung (8) eines digitalen Bildes auf einem digitalen Drucker,
umfassend die nachstehenden Schritte:
- Erhalten, aus der Farbtrennung (8), eines ersten verdünnten digitalen Bildes (11) und eines zweiten verdünnten digitalen Bildes (12), indem jeder Pixelwert der Farbtrennung (8) gemäß einem Satz von Verdünnungsprozentsätzen aufgeteilt wird, um zwei oder mehr verdünnte digitale Bilder zu erhalten,
- Aufteilen des ersten verdünnten digitalen Bildes (11) in eine Mehrzahl aufeinanderfolgender Streifen, umfassend:
einen ersten Streifen (111) mit einem ersten Zwischenbereich (1112), gefolgt von einem ersten Überlappungsbereich (1111), und einen zweiten Streifen (112) mit einem zweiten Überlappungsbereich (1121), gefolgt von einem zweiten Zwischenbereich (1122), wobei der erste Überlappungsbereich (1111) und der zweite Überlappungsbereich (1121) eine Überlappung im ersten Streifen (111) und im zweiten Streifen (112) bilden und wobei der erste Überlappungsbereich (1111) und der zweite Überlappungsbereich (1121) ausgehend von der Überlappung im ersten Streifen (111) und im zweiten Streifen (112) verdünnt werden,
- Aufteilen des zweiten verdünnten digitalen Bildes (12) in eine weitere Mehrzahl aufeinanderfolgender Streifen, umfassend:
einen dritten Streifen (121) mit einem dritten Zwischenbereich (1212), gefolgt von einem dritten Überlappungsbereich (1211), und einen vierten Streifen (122) mit einem vierten Überlappungsbereich (1221), gefolgt von einem vierten Zwischenbereich (1222), wobei der dritte Überlappungsbereich (1211) und der vierte Überlappungsbereich (1221) eine Überlappung im dritten Streifen (121) und im vierten Streifen (122) bilden und wobei der dritte Überlappungsbereich (1211) und der vierte Überlappungsbereich (1221) ausgehend von der Überlappung im dritten Streifen (121) und im vierten Streifen (122) verdünnt werden,
- Wiedergabe des ersten verdünnten digitalen Bildes (11) und des zweiten verdünnten digitalen Bildes (12),
- indem Halbtonraster (11121, 11112, 11213, 11224, 12125, 12116, 12217, 12228) des ersten Zwischenbereichs (1112), des zweiten Zwischenbereichs (1122), des ersten Überlappungsbereichs (1111), des zweiten Überlappungsbereichs (1121), des dritten Zwischenbereichs (1212), des vierten Zwischenbereichs (1222), des dritten Überlappungsbereichs (1211) und des vierten Überlappungsbereichs (1221) erhalten werden, wobei die Halbtonraster unabhängig voneinander mittels eines oder mehrerer Rasterungsverfahren erhalten werden,
- indem die Halbtonraster zu einer Drucksteuerungseinheit des digitalen Druckers übertragen werden, um die Farbtrennung (8) auf dem digitalen Drucker zu drucken, wobei
das Halbtonraster des dritten Zwischenbereichs (1212) teilweise oder vollständig auf dem Halbtonraster des ersten Zwischenbereichs (1112) gedruckt wird,
das Halbtonraster des vierten Zwischenbereichs (1222) teilweise oder vollständig auf dem Halbtonraster des zweiten Zwischenbereichs (1122) gedruckt wird,
das Halbtonraster des zweiten Überlappungsbereichs (1121) teilweise oder vollständig auf dem Halbtonraster des ersten Überlappungsbereichs (1111) gedruckt wird,
das Halbtonraster des vierten Überlappungsbereichs (1221) teilweise oder vollständig auf dem Halbtonraster des dritten Überlappungsbereichs (1211) gedruckt wird,
wobei der digitale Drucker ein Mehrband-Tintenstrahldrucker ist, wobei die Farbtrennung (8) in mehrfachen Bändern, die den aufeinanderfolgenden Streifen des ersten verdünnten digitalen Bildes (11) und des zweiten verdünnten digitalen Bildes (12) entsprechen, gedruckt wird.

2. Wiedergabe einer Farbtrennung (8) nach Anspruch 1, wobei der erste Überlappungsbereich (1111) und/oder der zweite Überlappungsbereich (1121) kalibriert wird (werden), um Farbinkonsistenz zwischen dem gedruckten ersten Zwischenbereich (1112), dem gedruckten zweiten Zwischenbereich (1122) und der gedruckten Überlappung im ersten Streifen (111) und im zweiten Streifen (112) zu verhindern.

3. Wiedergabe einer Farbtrennung (8) nach Anspruch 1 oder Anspruch 2, wobei der erste Überlappungsbereich (1111) und/oder der zweite Überlappungsbereich (1121) kalibriert wird (werden), um Glanzinkonsistenz zwischen dem gedruckten ersten Zwischenbereich (1112), dem gedruckten zweiten Zwischenbereich (1122) und der gedruckten Überlappung im ersten Streifen (111) und im zweiten Streifen (112) zu vermeiden.

4. Wiedergabe einer Farbtrennung (8) nach einem der Ansprüche 1 bis 3, wobei der dritte Überlappungsbereich (1211) und/oder der vierte Überlappungsbereich (1221) kalibriert wird (werden), um Farbinkonsistenz zwischen dem gedruckten dritten Zwischenbereich (1212), dem gedruckten vierten Zwischenbereich (1222) und der gedruckten Überlappung im dritten Streifen (121) und im vierten Streifen (122) zu vermeiden.

5. Wiedergabe einer Farbtrennung (8) nach einem der Ansprüche 1 bis 4, wobei der dritte Überlappungsbereich (1211) und/oder der vierte Überlappungsbereich (1221) kalibriert wird (werden), um Glanzinkonsistenz zwischen dem gedruckten dritten Zwischenbereich (1212), dem gedruckten vierten Zwischenbereich (1222) und der gedruckten Überlappung im dritten Streifen (121) und im vierten Streifen (122) zu vermeiden.

6. Wiedergabe einer Farbtrennung (8) nach einem der vorstehenden Ansprüche, wobei der digitale Drucker eine Druckeinheit und eine weitere Druckeinheit umfasst und wobei die Mehrzahl aufeinanderfolgender Streifen mittels der Druckeinheit gedruckt wird und die weitere Mehrzahl aufeinanderfolgender Streifen mittels der weiteren Druckeinheit gedruckt wird.

7. Wiedergabe einer Farbtrennung (8) nach einem der Ansprüche 1 bis 6, wobei der erste Überlappungsbereich (1111) ausgehend von der Überlappung im ersten Streifen (111) und im zweiten Streifen (112) gemäß einem Gradienten verdünnt wird und wobei der zweite Überlappungsbereich (1121) ausgehend von der Überlappung im ersten Streifen (111) und im zweiten Streifen (112) gemäß einem Komplement zum Gradienten verdünnt wird.

8. Wiedergabe einer Farbtrennung (8) nach einem der Ansprüche 1 bis 6, wobei der erste Überlappungsbereich (1111) mittels eines Verdünnungsverfahrens ausgehend von der Überlappung im ersten Streifen (111) und im zweiten Streifen (112) gemäß einer bestimmten mathematischen Funktion und/oder einer Randomfunktion aufgeteilt wird und wobei der zweite Überlappungsbereich (1121) mittels eines Verdünnungsverfahrens ausgehend von der Überlappung im ersten Streifen (111) und im zweiten Streifen (112) komplementär zum ersten Überlappungsbereich (1121) aufgeteilt wird.

9. Wiedergabe einer Farbtrennung (8) nach Anspruch 7 oder Anspruch 8, wobei die Farbtrennung (8) mittels einer wässrigen pigmenthaltigen Tinte auf einem Substrat gedruckt wird.

10. Wiedergabe einer Farbtrennung (8) nach Anspruch 9, wobei die wässrige pigmenthaltige Tinte aus einer Gruppe ausgewählt wird, die Folgendes umfasst: eine wässrige Cyan-Tintenstrahltinte, enthaltend ein Kupferphthalocyaninpigment, bevorzugt ein ß-Kupferphthalocyaninpigment, eine wässrige rote Tintenstrahltinte, enthaltend ein rotes Pigment, ausgewählt aus der Gruppe bestehend aus C.I. Pigment Red 254, C.I. Pigment Red 122, C.I. Pigment Red 176 und Mischkristallen derselben oder eine wässrige Magenta-Tintenstrahltinte, enthaltend ein Magentapigment, ausgewählt aus der Gruppe bestehend aus C.I. Pigment Red 55, C.I. Pigment Red 60, C.I. Pigment Red 82, C.I. Pigment Red 86, C.I. Pigment Red 86:1, C.I. Pigment Red 167:1, C.I. Pigment Red 279 und Gemischen derselben, eine wässrige gelbe Tintenstrahltinte, enthaltend ein Pigment C.I Pigment Yellow 150 oder einen Mischkristall desselben und eine wässrige schwarze Tintenstrahltinte, enthaltend ein Rußpigment.

11. Wiedergabe einer Farbtrennung (8) nach Anspruch 10, wobei das Substrat Papier mit einer Grammatur zwischen 50 g/m² und 180 g/m² ist.

12. Wiedergabe einer Farbtrennung (8) nach Anspruch 11, wobei das Papier eine die Tintenstrahl aufnehmende, ein anorganisches Pigment P und ein polymeres Bindemittel B enthaltende Schicht enthält.

13. Wiedergabe einer Farbtrennung (8) nach Anspruch 12, wobei das Pigment P aus der Gruppe bestehend aus Aluminiumoxidhydroxiden, Aluminiumoxiden, Aluminiumhydroxiden, Aluminiumsilikaten und Silicas ausgewählt wird.

14. Wiedergabe einer Farbtrennung (8) nach einem der vorstehenden Ansprüche, wobei die Halbtonraster mittels eines oder mehrerer Fehlerdiffusionsverfahren erhalten werden.

15. Wiedergabe eines digitalen Farbbildes, wobei der digitale Drucker ein erstes Farbmittel und ein zweites Farbmittel enthält und wobei aus dem digitalen Farbbild eine erste, dem ersten Farbmittel entsprechende Farbtrennung erzeugt wird und wobei aus dem digitalen Farbbild eine zweite, dem zweiten Farbmittel entsprechende Farbtrennung erzeugt wird und wobei die erste Farbtrennung nach einem der vorstehenden Ansprüche unter Verwendung des ersten Farbmittels wiedergegeben wird und die zweite Farbtrennung nach einem der vorstehenden Ansprüche unter Verwendung des zweiten Farbmittels wiedergegeben wird.

## Revendications

1. Rendu d'une séparation de couleurs (8) d'une image numérique sur une imprimante numérique,
comprenant les étapes consistant à:
- obtenir, à partir de ladite séparation de couleurs (8), une première image numérique diluée (11) et une deuxième image numérique diluée (12) en divisant chaque valeur de pixel de la séparation de couleurs (8) selon un ensemble de pourcentages de dilution afin d'obtenir au moins deux images numériques diluées,
- diviser ladite première image numérique diluée (11) en une multitude de bandes successives comprenant:
une première bande (111) comprenant une première zone intermédiaire (1112) suivie d'une première zone de recouvrement (1111), et
une deuxième bande (112) comprenant une deuxième zone de recouvrement (1121) suivie d'une deuxième zone intermédiaire (1122), **caractérisé en ce que** ladite première zone de recouvrement (1111) et ladite deuxième zone de recouvrement (1121) forment un recouvrement dans ladite première bande (111) et dans ladite deuxième bande (112) et **caractérisé en ce que** ladite première zone de recouvrement (1111) et ladite deuxième zone de recouvrement (1121) sont diluées à partir dudit recouvrement dans ladite première bande (111) et dans ladite deuxième bande (112),
- diviser la deuxième image numérique diluée (12) en une autre multitude de bandes successives comprenant:
une troisième bande (121) comprenant une troisième zone intermédiaire (1212) suivie d'une troisième zone de recouvrement (1211) et une quatrième bande (122) comprenant une quatrième zone de recouvrement (1221) suivie d'une quatrième zone intermédiaire (1222), **caractérisé en ce que** la troisième zone de recouvrement (1211) et la quatrième zone de recouvrement (1221) forment un recouvrement dans ladite troisième bande (121) et dans ladite quatrième bande (122) et **caractérisé en ce que** la troisième zone de recouvrement (1211) et la quatrième zone de recouvrement (1221) sont diluées à partir dudit recouvrement dans ladite troisième bande (121) et dans ladite quatrième bande (122),
- rendre ladite première image numérique diluée (11) et ladite deuxième image numérique diluée (12),
- en obtenant des trames de demi-teintes (11121, 11112, 11213, 11224, 12125, 12116, 12217, 12228) de la première zone intermédiaire (1112), de la deuxième zone intermédiaire (1122), de la première zone de recouvrement (1111), de la deuxième zone de recouvrement (1121), de la troisième zone intermédiaire (1212), de la quatrième zone intermédiaire (1222), de la troisième zone de recouvrement (1211) et de la quatrième zone de recouvrement (1221), **caractérisé en ce que** les trames de demi-teintes sont obtenues, indépendamment l'une de l'autre, au moyen d'un ou de plusieurs procédés de tramage,
- en transférant lesdites trames de demi-teintes à un contrôleur d'impression de l'imprimante numérique afin d'imprimer la séparation de couleurs (8) sur l'imprimante numérique, **caractérisé en ce que**
la trame de demi-teintes de la troisième zone intermédiaire (1212) est imprimée partiellement ou complètement sur la trame de demi-teintes de la première zone intermédiaire (1112),
la trame de demi-teintes de la quatrième zone intermédiaire (1222) est imprimée partiellement ou complètement sur la trame de demi-teintes de la deuxième zone intermédiaire (1122),
la trame de demi-teintes de la deuxième zone de recouvrement (1121) est imprimée partiellement ou complètement sur la trame de demi-teintes de la première zone de recouvrement (1111),
la trame de demi-teintes de la quatrième zone de recouvrement (1221) est imprimée partiellement ou complètement sur la trame de demi-teintes de la troisième zone de recouvrement (1211), **caractérisé en ce que** l'imprimante numérique est une imprimante à jet d'encre à bandes multiples, **caractérisé en ce que** la séparation de couleurs (8) est imprimée au moyen de bandes multiples correspondant aux bandes successives de la première image numérique diluée (11) et de la deuxième image numérique diluée (12).

2. Rendu d'une séparation de couleurs (8) selon la revendication 1, **caractérisé en ce que** la première zone de recouvrement (1111) et/ou la deuxième zone de recouvrement (1121) est (sont) calibrée(s) afin d'éviter les disparités chromatiques entre la première zone intermédiaire imprimée (1112), la deuxième zone intermédiaire imprimée (1122) et le recouvrement imprimé dans ladite première bande (111) et dans ladite deuxième bande (112).

3. Rendu d'une séparation de couleurs (8) selon la revendication 1 ou la revendication 2, **caractérisé en ce que** la première zone de recouvrement (1111) et/ou la deuxième zone de recouvrement (1121) est (sont) calibrée(s) afin d'éviter les disparités de brillant entre la première zone intermédiaire imprimée (1112), la deuxième zone intermédiaire imprimée (1122) et le recouvrement imprimé dans ladite première bande (111) et dans ladite deuxième bande (112).

4. Rendu d'une séparation de couleurs (8) selon l'une quelconque des revendications 1 à 3, **caractérisé en ce que** la troisième zone de recouvrement (1211) et/ou la quatrième zone de recouvrement (1221) est (sont) calibrée(s) afin d'éviter les disparités chromatiques entre la troisième zone intermédiaire imprimée (1212), la quatrième zone intermédiaire imprimée (1222) et le recouvrement imprimé dans ladite troisième bande (121) et dans ladite quatrième bande (122).

5. Rendu d'une séparation de couleurs (8) selon l'une quelconque des revendications 1 à 4, **caractérisé en ce que** la troisième zone de recouvrement (1211) et/ou la quatrième zone de recouvrement (1221) est (sont) calibrée(s) afin d'éviter les disparités de brillant entre la troisième zone intermédiaire imprimée (1212), la quatrième zone intermédiaire imprimée (1222) et le recouvrement imprimé dans ladite troisième bande (121) et dans ladite quatrième bande (122).

6. Rendu d'une séparation de couleurs (8) selon l'une quelconque des revendications précédentes, **caractérisé en ce que** l'imprimante numérique comprend une unité d'impression et une autre unité d'impression et **caractérisé en ce que** la multitude de bandes successives est imprimée au moyen de ladite unité d'impression et que l'autre multitude de bandes successives est imprimée au moyen de ladite autre unité d'impression.

7. Rendu d'une séparation de couleurs (8) selon l'une quelconque des revendications 1 à 6, **caractérisé en ce que** la première zone de recouvrement (1111) est diluée à partir du recouvrement dans ladite première bande (111) et dans ladite deuxième bande (112) selon un gradient et **caractérisé en ce que** la deuxième zone de recouvrement (1121) est diluée à partir du recouvrement dans ladite première bande (111) et dans ladite deuxième bande (112) selon un complément au gradient.

8. Rendu d'une séparation de couleurs (8) selon l'une quelconque des revendications 1 à 6, **caractérisé en ce que** la première zone de recouvrement (1111) est divisée au moyen d'un procédé de dilution à partir du recouvrement dans ladite première bande (111) et dans ladite deuxième bande (112) selon une fonction mathématique déterminée et/ou selon une fonction aléatoire et **caractérisé en ce que** la deuxième zone de recouvrement (1121) est divisée au moyen d'un procédé de dilution à partir du recouvrement dans ladite première bande (111) et dans ladite deuxième bande (112) en complément à la première zone de recouvrement (1121).

9. Rendu d'une séparation de couleurs (8) selon la revendication 7 ou la revendication 8, **caractérisé en ce que** la séparation de couleurs (8) est imprimée sur un substrat en utilisant une encre aqueuse pigmentée.

10. Rendu d'une séparation de couleurs (8) selon la revendication 9, **caractérisé en ce que** l'encre aqueuse pigmentée est choisie parmi le groupe comprenant une encre pour jet d'encre aqueuse cyan contenant un pigment de phtalocyanine de cuivre, de préférence un pigment de ß-phtalocyanine de cuivre, une encre pour jet d'encre aqueuse rouge contenant un pigment rouge choisi parmi le groupe composé de C.I. Pigment Red 254, C.I. Pigment Red 122, C.I. Pigment Red 176 et de cristaux mixtes de ceux-ci ou une encre pour jet d'encre aqueuse magenta contenant un pigment magenta choisi parmi le groupe composé de C.I. Pigment Red 55, C.I. Pigment Red 60, C.I. Pigment Red 82, C.I. Pigment Red 86, C.I. Pigment Red 86:1, C.I. Pigment Red 167:1, C.I. Pigment Red 279 et de mélanges de ceux-ci, une encre pour jet d'encre aqueuse jaune contenant un pigment C.I Pigment Yellow 150 ou un cristal mixte de celui-ci et une encre pour jet d'encre aqueuse noire contenant un pigment de noir de carbone.

11. Rendu d'une séparation de couleurs (8) selon la revendication 10, **caractérisé en ce que** le substrat est du papier ayant un grammage compris entre 50 g/m² et 180 g/m².

12. Rendu d'une séparation de couleurs (8) selon la revendication 11, **caractérisé en ce que** le papier comprend une couche réceptrice de jet d'encre contenant un pigment inorganique P et un liant polymère B.

13. Rendu d'une séparation de couleurs (8) selon la revendication 12, **caractérisé en ce que** le pigment P est choisi parmi le groupe composé d'hydrates d'alumine, d'oxydes d'aluminium, d'hydroxydes d'aluminium, de silicates d'aluminium et de silices.

14. Rendu d'une séparation de couleurs (8) selon l'une quelconque des revendications précédentes, **caractérisé en ce que** les trames de demi-teintes sont obtenues au moyen d'un ou de plusieurs procédés de diffusion d'erreur.

15. Rendu d'une image couleur numérique, **caractérisé en ce que** l'imprimante numérique contient une première matière colorante et une deuxième matière colorante et **caractérisé en ce qu'**il est généré, à partir de ladite image couleur numérique, une première séparation de couleurs correspondant à la première matière colorante et **caractérisé en ce qu'**il est généré, à partir de ladite image couleur numérique, une deuxième séparation de couleurs correspondant à la deuxième matière colorante et **caractérisé en ce que** la première séparation de couleurs est rendue selon l'une quelconque des revendications précédentes en utilisant la première matière colorante et que la deuxième séparation de couleurs est rendue selon l'une quelconque des revendications précédentes en utilisant la deuxième matière colorante.
